# EUROPEAN PATENT SPECIFICATION

(11) **EP 1 683 698 B1**
(45) Date of publication and mention of the grant of the patent: **25.08.2010**
(21) Application number: 05027507.2
(22) Date of filing: 15.12.2005
(51) Int. Cl.: B60W 20/00, B60K 6/48, B60W 30/08, B60W 10/08

(54) **Vehicle collision safety system**
Fahrzeug-Kollisions-Sicherheitssystem
Dispositif de sécurité pour un véhicule automobile en cas de collision

(30) Priority: 28.12.2004 JP 2004380894
(43) Date of publication of application: 26.07.2006
(73) Proprietor: DENSO CORPORATION, Kariya-city, Aichi-pref. 448-8661 (JP)
(72) Inventor: Yoshida, Masatada, Kariya-city Aichi-pref. 448-8661 (JP)
(74) Representative: Kuhnen & Wacker

(56) References cited:
- EP-A1- 0 322 599
- EP-A2- 1 164 048
- US-A- 5 389 824
- US-A1- 2002 147 535

## Description

The present invention generally relates to a vehicle collision safety system for a hybrid vehicle and a fuel cell vehicle.

From US 5,389,824 discloses a vehicle collision safety system according to the preamble of claim 1.

From EP 1 164 048 A2 there is known a method and an apparatus for cutting off fuel supply of a fuel cell vehicle. The occurrence of degradation and damage to a fuel cell when power supply to accessories for driving the fuel cell is stopped, is prevented. Respective collision judgment sections read in an acceleration signal output from corresponding acceleration sensors and judge if the acceleration signal is greater than a predetermined first threshold acceleration, and if the judgment result is "YES", close a hydrogen control valve. They then judge if the acceleration signal exceeds a predetermined second threshold acceleration greater than the first threshold acceleration, and if the judgment result is "YES", stop power supply from a power storage unit to an air compressor for driving the fuel cell.

In recent years, a hybrid vehicle and a fuel cell vehicle that utilize both an internal-combustion engine and an electric motor are developed. These types of vehicle use high voltage electricity and/or high pressure flammable gas. Safety measure for the electricity and the flammable gas is required for safely operating these types of vehicle. That is, the high voltage electricity and the flammable gas are hazardous when they leak from wiring or piping in the vehicle because of the breakage of the wiring/piping owing to a collision of the vehicle or the like.

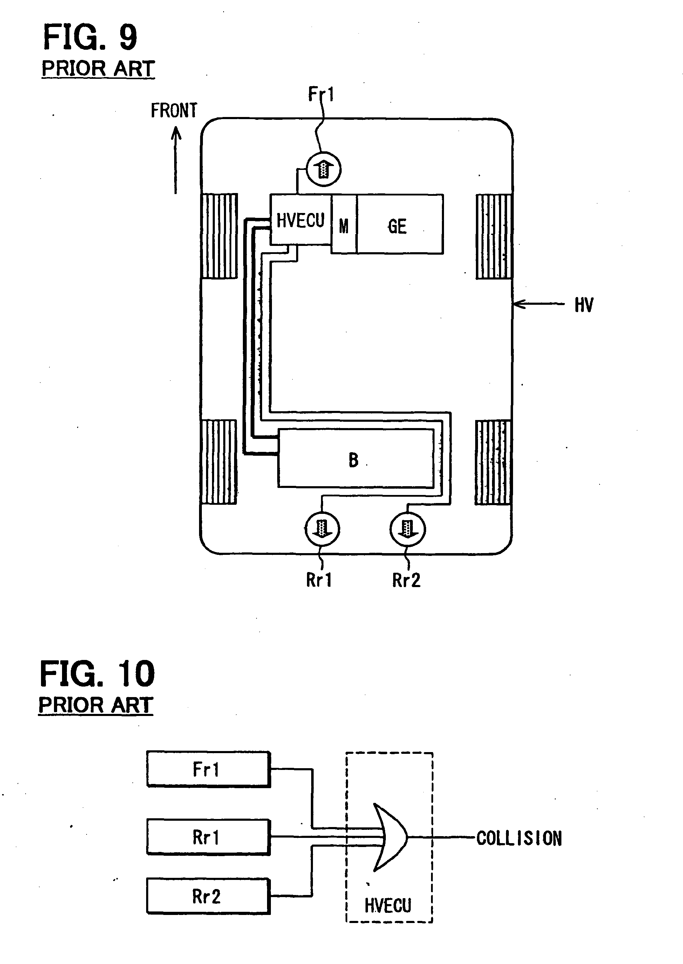

In order to protect occupants of the vehicle from the undesirable effect of the electricity and/or the flammable gas, a collision safety system for vehicle has been proposed. The vehicle collision safety system detects the collision of the vehicle by using collision sensors, and immediately cuts off the electricity and/or the flammable gas when the collision is detected. FIGS. 9 and 10 show a block diagram of the vehicle collision safety system and a schematic diagram of a logical circuit for collision detection. The collision safety system shown in FIG. 9 includes a plurality of sensors Fr1, Rr1, Rr2, and the collision detection logic implemented in a hybrid system ECU that controls a motor M and an engine GE in a hybrid type vehicle.

However, the collision safety system described above detects the collision of the vehicle based on a signal generated by only one of those sensors. Therefore, the signal mistakenly sent to the ECU because of a malfunction or a noise from only one sensor causes a shutoff of supply of the electricity and/or the flammable gas to an engine or a motor. Malfunction of the collision safety system is inconvenient for a driver of a vehicle, nor is not desirable when the vehicle is traveling on a road and/or is being operated in other situation.

In view of the above-described and other problems, the present invention provides a vehicle collision safety system that prevents a system halt or system malfunction because of malfunction of a sensor, system noise or the like.

The vehicle collision safety system of the present invention is equipped with a plurality of sensors for detecting collision of a subject vehicle based on a study conducted by the inventors of the present invention. The vehicle collision safety system includes an engine that is coupled with an electric motor, a power source for supplying electricity by charge/discharge of electricity in electrical connection with the electric motor, a plurality of collision detectors for detecting collision of the vehicle, and a calculation unit for determining collision based on a collision signal generated by the collision detectors. The vehicle collision safety system halts the supply of the electricity from the power source when the calculation unit detects the collision based on the collision signal from the collision detector. The calculation unit determines the collision based on the collision signal generated by at least two collision detectors.

The vehicle collision safety system of the present invention can also be applicable to a vehicle that uses a fuel cell for supplying the electricity to the electrical motor. In this case, supply of fuel gas for the fuel cell as well as supply of the electricity from the fuel cell to the electrical motor are shutoff when the collision of the vehicle is detected by the plurality of collision detectors in the vehicle.

In this manner, the vehicle collision safety system prevents a secondary disaster related to a collision of the vehicle by shutting off the electricity and the fuel gas based on the detection of the collision. Further, the vehicle collision safety system prevents shutting off of the electricity and the fuel gas related to malfunction of the sensors, noise in the system or the like. Therefore, the vehicle is safely operated without having trouble caused by a false collision detection.

Mechanism and scheme of the vehicle collision safety system of the present invention are further described in detail in the following.

The vehicle collision safety system of the present invention prevents false collision detection by using collision signals from at least two collision detectors that are disposed closely to each other. The positions of the collision detectors in the vehicle are not limited in any specific space. The positions of the collision detectors may be a front part of the vehicle, that is an area in an engine compartment or the like in the vehicle. The positions of the at least two sensors may preferably be different positions on a same component such as an engine or the like. In this manner, the accuracy of collision detection is improved.

Further, the vehicle collision safety system may include plural sets of collision safety systems in one vehicle. That is, one system for the front part of the vehicle and another system for a rear part of the vehicle may be used for collision detection. The plural sets of the collision safety systems may be used for detecting collisions in different collision directions. The plural sets of the collision safety systems may share one calculation unit for determining collision.

Further, the vehicle collision safety system may use one collision detector for verification of collision detected by other collision detector. In this manner, a false collision detection signal from one collision detector is cancelled by using the collision detector for verification.

The collision detector used for verification of collision may be additionally installed, or an existing one that is originally used for collision detection. The collision detector used for verification of collision may be a sensor for existing systems other than the collision safety system. The sensor of the existing systems may include an acceleration sensor for an air-bag system, a strain sensor, a pressure sensor, an ultrasonic sensor, a laser radar and the like. In this manner, cost for assembling an additional sensor and cost for the additional sensor can be saved.

The calculation unit may use a collision signal directly received from the collision detector, i.e., the sensor in the existing system, or may use a result of calculation derived from the system that originally uses the sensor.

The collision detector used for verification of collision may detect a collision in a same manner as the other collision detectors, or may detect a collision in a different manner.

The engine in the vehicle collision safety system of the present invention includes the electric motor used for providing propulsion power for the vehicle. The electric motor may be used by itself in an electric vehicle, or may be used in combination with other types of engines. That is, the vehicle collision safety system may be applicable to the electric vehicle, or may be applicable to a hybrid vehicle.

The engine in the hybrid vehicle may be a gasoline engine, a diesel engine or other type of an internal combustion engine. The type of the hybrid vehicle may be a so-called series type hybrid vehicle, a so-called parallel type hybrid vehicle or a so-called series parallel type hybrid vehicle.

A calculation unit used for optimum power distribution in the engine of the hybrid vehicle may be used as the calculation unit of the vehicle collision safety system of the present invention.

An electric power source coupled with the electric motor stores and supplies the electricity by charging and discharging the electricity. That is, the electric power source supplies the electricity for the electric motor for generating propulsion force and stores the electricity derived from moment of the vehicle by using a regenerating mechanism or the like. The electric power source used in the present invention includes a charging/discharging unit for charging/discharging of the electricity, and a breaker for controlling charging/discharging of the electricity. The charging/discharging unit includes a so-called secondary battery and a capacitor.

The vehicle collision safety system of the present invention is beneficial when the electric motor uses a high voltage electricity for charging/discharging the electric power source.

The collision detector in the present invention may detect a collision either by a continuous operation while the vehicle is in operation or by an on-demand operation on an occurrence of the collision. For example, the collision may be detected as an abnormal value from the collision detector, e.g., from the acceleration sensor.

The calculation unit of the vehicle collision safety system includes a well-known type of ECU for use in the vehicle.

The charging/discharging of the electricity from the electric power source is intercepted by sending a control signal for shut-off to the power source when the calculation unit determines the collision of the vehicle.

The vehicle collision safety system of the present invention may also be applicable to a fuel cell vehicle that uses fuel gas stored in a fuel tank for supplying the electricity for the motor. The vehicle collision safety system shuts off the supply of the fuel gas when the calculation unit determines the collision based on a collision signal from the collision detectors. In this manner, the secondary disaster caused by the leakage of the fuel gas is prevented.

The fuel cell in the fuel cell vehicle provides the electricity derived from an electro-chemical reaction for the electric motor to propel the vehicle. The fuel cell of a well-known type includes a cell stack, a collector electrode, an insulation plate, a constriction plate, a reaction gas manifold and the like for continuously generating the electricity. The engine in the fuel cell vehicle includes a calculation unit for optimally distributing the power from the electric motor. The calculation unit in the engine may serve as the calculation unit in the collision safety system of the present invention for determining the collision. The fuel tank of a well-known type is used for storing the fuel gas that is provided to the electrode in the fuel cell.

Other objects, features and advantages of the present invention will become more apparent from the following detailed description made with reference to the accompanying drawings, in which:
FIG. 1 shows a block diagram of a collision safety system for a hybrid vehicle in a first embodiment of the present invention;
FIG. 2 shows a collision detection logic of the collision safety system in the first embodiment;
FIG. 3 shows a block diagram of a collision safety system for a hybrid vehicle in a second embodiment of the present invention;
FIG. 4 shows a collision detection logic of the collision safety system in the second embodiment;
FIG. 5 shows a block diagram of a collision safety system for a hybrid vehicle in a third embodiment of the present invention;
FIG. 6 shows a collision detection logic of the collision safety system in the third embodiment;
FIG. 7 shows a block diagram of a collision safety system for a fuel cell vehicle in a fourth embodiment of the present invention;
FIG. 8 shows a collision detection logic of the collision safety system in the fourth embodiment;
FIG. 9 shows a block diagram of a collision safety system for a conventional hybrid vehicle; and
FIG. 10 shows a collision detection logic of the collision safety system in the conventional hybrid vehicle.

Embodiments of the present invention are described with reference to the drawings.

### (First embodiment)

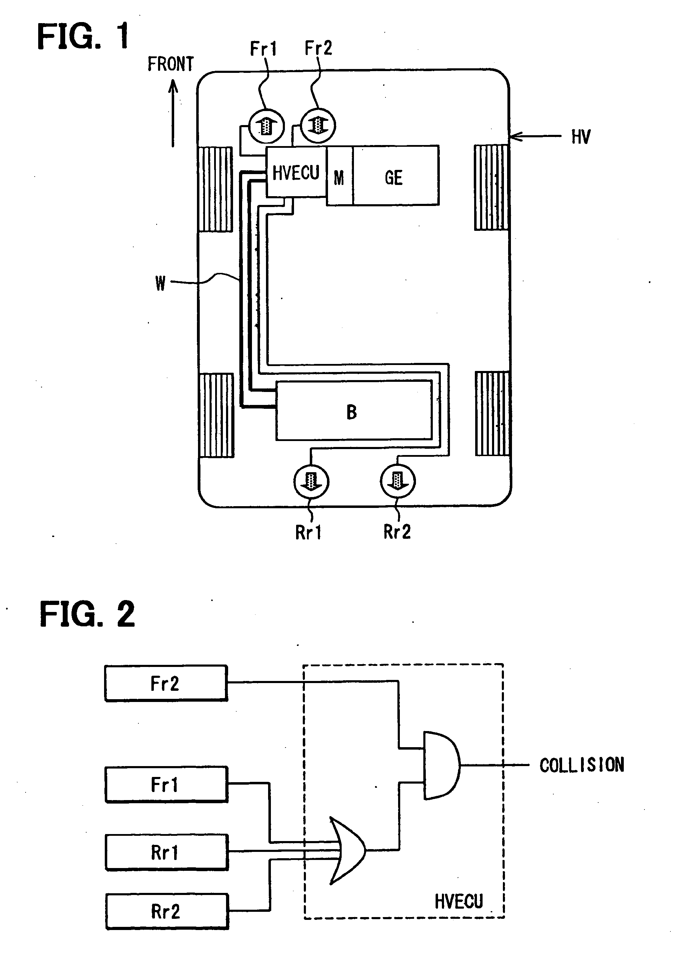

A first embodiment of the present invention is described as a vehicle collision safety system in a hybrid vehicle. FIG. 1 shows a block diagram of the vehicle collision safety system for the hybrid vehicle HV in the present embodiment.

The hybrid vehicle HV is equipped with a motor M and a gasoline engine GE. The hybrid vehicle HV further includes a hybrid system ECU (HVECU), a secondary battery B, acceleration sensors Fr1, Fr2, Rr1, Rr2.

The motor M, the gasoline engine GE and the HVECU is stored in a front part of the hybrid vehicle HV of the present invention. The motor M and the gasoline engine GE are used for propelling the hybrid vehicle HV. The motor M and the gasoline engine GE are controlled by the HVECU.

The secondary battery B is stored in a rear part of the hybrid vehicle HV. The secondary battery B is coupled with the HVECU for generating propulsion force by the motor M with electricity and for storing regenerated energy as the electricity when speed of the hybrid vehicle HV is reduced. The secondary battery B has an electricity controller (not shown in the figure) for controlling discharged electricity (voltage of the electricity, current of the electricity, an electric energy) discharged therefrom. The electricity controller is electrically connected with the secondary battery B for controlling the discharged electricity under instruction from the HVECU.

The hybrid vehicle HV has two acceleration sensors Fr1, Fr2 at a proximity of the HVECU, and has two acceleration sensors Rr1, Rr2 at a proximity of the secondary battery B. These acceleration sensors detect acceleration in a traveling direction of the vehicle. These acceleration sensors are connected to the HVECU for sending detection results to the HVECU. Each of these sensors Fr1, Fr2, Rr1, Rr2 outputs a collision signal by converting change in acceleration when the hybrid vehicle HV collides with an object. An arrow sign shown in each of the acceleration sensors indicates a direction of positive detection result outputted by the sensor.

The acceleration sensors Fr1, Fr2 mainly detect impact of the collision applied in the front part of the vehicle HV, and the acceleration sensors Rr1, Rr2 mainly detect impact of the collision applied in the rear part of the vehicle HV.

FIG. 2 shows a collision detection logic of the collision safety system in the first embodiment. The HVECU determines occurrence of the collision when it receives the collision signals from the acceleration sensor Fr2 and from at least one of the acceleration sensors Fr1, Rr1, Rr2.

The HVECU sends the control signal to an electricity controller in the secondary battery B for shutting off discharge of the electricity when it detects a collision. In this manner, an electric shock caused by a leakage of the electricity from the secondary battery B is prevented in the hybrid vehicle HV even when wiring in the vehicle HV is damaged by the collision.

The vehicle collision safety system in the present embodiment determines the collision based on the collision signal from the sensor Fr2, and from at least one of the three sensors Fr1, Rr1, Rr2. In this manner, malfunction of only one of the four sensors is not falsely determined as the collision of the hybrid vehicle HV. Therefore, the hybrid vehicle HV does not suffer from a falsely detected collision while it is in operation.

### (Second embodiment)

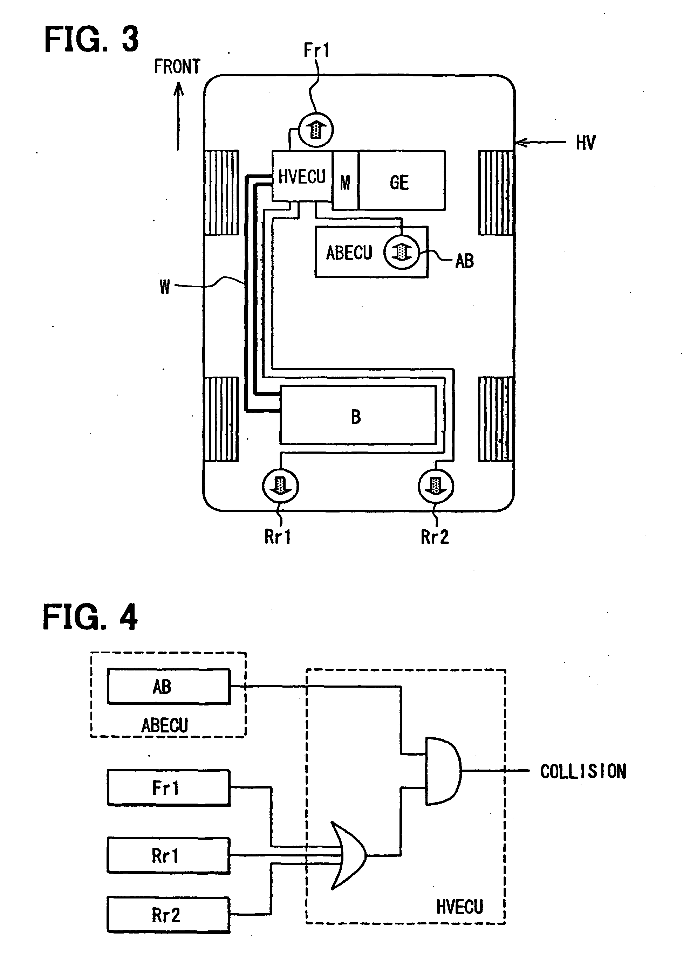

In a second embodiment of the vehicle collision safety system, the acceleration sensor Fr2 in the first embodiment is replaced with an acceleration sensor for an airbag. The rest of the collision safety system is the same as the system described in the first embodiment. FIG. 3 shows a block diagram of the collision safety system in the present embodiment.

An airbag system in the present embodiment includes an acceleration sensor AB for generating a collision signal upon detecting the collision, an airbag ECU (ABECU) for determining the collision and generating the collision signal, and an airbag (not shown in the figure) for protecting an occupant of the vehicle by deploying itself based on the collision signal. The acceleration sensor AB is disposed on a substrate of the ABECU.

The acceleration sensor AB and the ABECU in the present embodiment is connected with each other. The acceleration sensor AB is also connected with the HVECU. That is, the collision signal generated by the acceleration sensor AB is used for the deployment of the airbag in the ABECU, and is used for the operation of the vehicle collision safety system in the HVECU.

The HVECU uses the collision signal from the acceleration sensor AB instead of the collision signal from the acceleration sensor Fr2 for detecting the collision of the vehicle. That is, the collision signal from the acceleration sensor AB in combination with the collision signal from at least one of the three acceleration sensors Fr1, Rr1, Rr2 determines the collision of the hybrid vehicle HV. The collision detection logic in the HVECU is shown in FIG. 4.

The vehicle collision safety system of the present embodiment has a same effect as the system in the first embodiment. Further, the vehicle collision safety system of the present embodiment reduces the number of parts and cost of assembly by sharing the acceleration sensor AB with the airbag system.

### (Third embodiment)

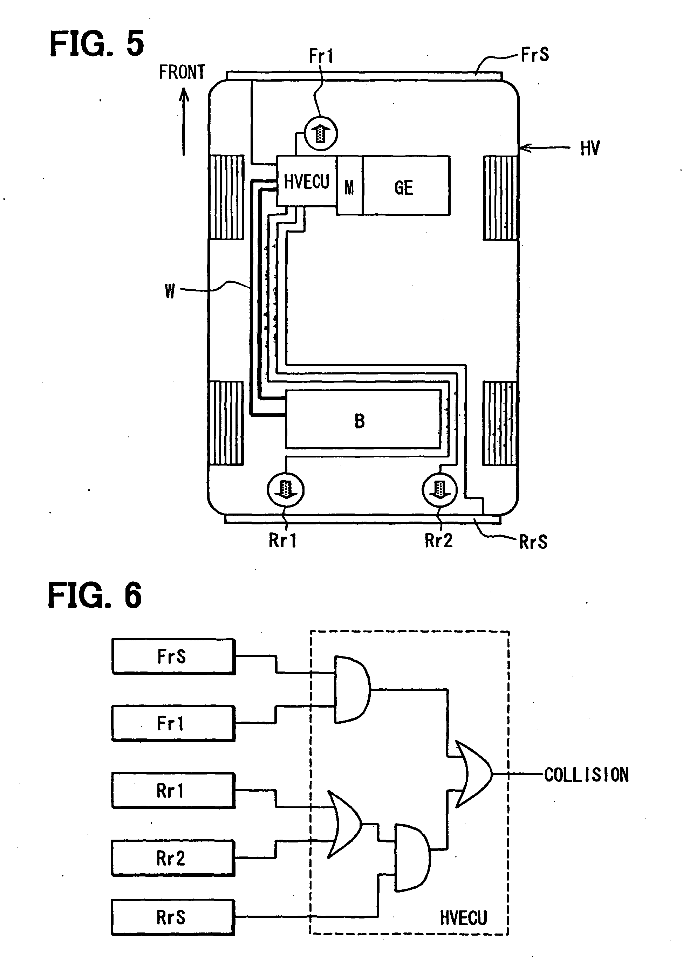

The vehicle collision safety system in a third embodiment uses strain sensors in a front and rear bumpers instead of the acceleration sensor AB in the second embodiment of the vehicle. FIG. 5 shows a block diagram of the vehicle collision safety system in the present embodiment. The vehicle collision safety system in the present embodiment uses the collision signal only from the front part or only from the rear part of the hybrid vehicle HV for detecting the collision.

The strain sensors FrS, RrS are disposed in the bumpers in a front part and a rear part of the vehicle. The strain sensors FrS, RrS detect strain in the front bumper or the rear bumper for detecting the collision.

The strain sensors FrS, RrS are connected with a vehicle ECU (not shown in the figure) as well as the HVECU. That is, the collision signals generated by the strain sensors FrS, RrS are sent to the vehicle ECU and the HVECU for the operation of the vehicle collision safety system.

The vehicle collision safety system of the present embodiment determines the collision based on the collision signal only from the front part of the vehicle or only from the rear part of the vehicle. More practically, the HVECU of the present invention determines the collision of the hybrid vehicle HV based on the collision signal from the strain sensor FrS in combination with the collision signal from the acceleration sensor Fr1, or the collision signal from the strain sensor RrS in combination with the collision signal from at least one of the acceleration sensors Rr1, Rr2. The collision detection logic in the HVECU of the present invention is shown in FIG. 6.

The vehicle collision safety system of the present embodiment has a same effect as the system in the second embodiment. Further, the vehicle collision safety system of the present embodiment improves the accuracy of the collision detection by using different methods for separately detecting the collision. That is, the strain in the bumpers and change in the acceleration of the vehicle are combined for improving the accuracy of the collision detection.

### (Fourth embodiment)

The vehicle collision safety system is applicable to a fuel cell vehicle FCV for improving safety in case of the collision of the fuel cell vehicle.

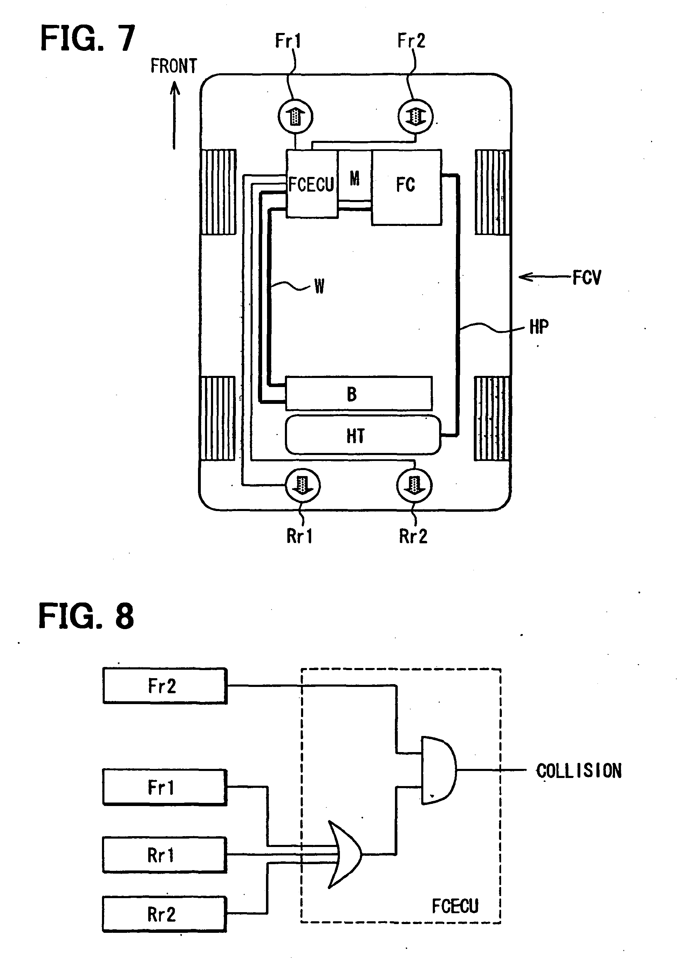

FIG. 7 shows a block diagram of the structure of the fuel cell vehicle FCV in a fourth embodiment of the present invention. The fuel cell vehicle FCV includes the motor M, a fuel cell FC, a fuel cell system ECU (FCECU), a hydrogen tank HT, the secondary battery B, and the acceleration sensors Fr1, Fr2, Rr1, Rr2, and FIG. 8 shows a schematic diagram of the collision detection logic used in the FCECU. The structure and mechanism of the fuel cell vehicle FCV with regard to the vehicle collision safety system of the present invention is described in the following.

The motor M, the fuel cell FC and the FCECU are disposed in the front space of the fuel cell vehicle FCV for providing the electricity from the fuel cell FC to the motor M for propelling the vehicle FCV. The motor M and the fuel cell FC are controlled by the FCECU.

The fuel cell FC has a cell stack that includes layers of polymer electrolyte fuel cells. The fuel cell FC uses hydrogen on a fuel electrode and oxygen on another electrode. The electricity generated by a reaction of the hydrogen and oxygen is provided for the motor M through the FCECU.

The hydrogen tank HT is connected to the fuel electrode in the fuel cell FC by a hydrogen gas pipe for providing the hydrogen for the electrode. The hydrogen tank HT includes a hydrogen controller (not shown in the figure) electrically connected with the FCECU for controlling supply of the hydrogen from the hydrogen tank HT.

The secondary battery B is disposed in the rear part of the fuel cell vehicle FCV for providing the electricity for the motor M and storing the electricity generated by regenerating device. The secondary battery B provides high voltage electricity for the FCECU through a high voltage wiring W. The secondary battery B includes an electricity controller for controlling the electricity discharged therefrom.

The acceleration sensors Fr1, Fr2 are disposed in a proximity of the FCECU in the fuel cell vehicle FCV, and the acceleration sensors Rr1, Rr2 are disposed in a proximity of the secondary battery B. Theses sensors detect acceleration of the vehicle in the same manner as the sensors described in the first embodiment. That is, the FCECU uses the collision signal from the Fr2 in combination with the collision signal from at least one of the three sensors Fr1, Rr1, Rr2.

The FCECU sends the control signal to the electricity controller in the secondary battery B and the hydrogen controller in the hydrogen tank HT for shutting off the supply of the electricity and the hydrogen from these devices. In this manner, the electricity and the hydrogen are respectively contained in the battery and the hydrogen tank even when the high voltage wiring connected to the secondary battery B and/or the hydrogen gas pipe connected to the hydrogen tank HT are damaged by the collision of the FCV. That is, the secondary disaster such as an electric shock and/or a fire caused by the high voltage electricity and/or the flammable hydrogen gas is prevented.

The vehicle collision safety system in the present embodiment determines the collision based on the collision signal from the sensor Fr2, and from at least one of the three sensors Fr1, Rr1, Rr2. In this manner, malfunction of only one of the four sensors is not falsely determined as the collision of the fuel cell vehicle FCV. Therefore, the fuel cell vehicle FCV does not suffer from a falsely detected collision while it is in operation.

Although the present invention has been fully described in connection with the preferred embodiments thereof with reference to the accompanying drawings, it is to be noted that various changes and modifications will become apparent to those skilled in the art.

For example, the collision detectors in the vehicle collision safety system detect the collision in the traveling direction of the vehicle in the above-described embodiments. However, the collision in a different direction may be detected by using different type sensors or by disposing the collision detectors in a different manner.

Such changes and modifications are to be understood as being within the scope of the present invention as defined by the appended claims.

## Claims

1. A vehicle collision safety system comprising:
an engine having an electric motor (M);
a power unit (B) in electrical connection with the electric motor (M) for charging and discharging electricity;
a plurality of collision detectors (Fr1, Fr2, Rr1, Rr2) for generating a collision signal upon detecting a collision of a vehicle; and
a calculation means (HVECU) for determining the collision of the vehicle upon receiving the collision signal from the collision detectors (Fr1, Fr2, Rr1, Rr2),
charging and discharging of electricity from the power unit (B) being shut off when the collision is determined by the calculation means (HVECU),
wherein the plurality of collision detectors (Fr1, Fr2, Rr1, Rr2) include a verification collision detector (Fr2) for verification of collision detection and at least two other collision detectors (two of Fr1, Rr1, Rr2),
the calculation means (HVECU) determines the collision of the vehicle when receiving a collision signal from the verification collision detector (Fr2) and a collision signal from at least one of the two other collision detectors (one of Fr1, Rr1, Rr2), and **characterised in that** the verification collision detector (Fr2) being at a proximity of the calculation means (HVECU).

2. The vehicle collision safety system according to claim 1,
wherein the verification collision detector (Fr2) includes an airbag acceleration sensor, a strain sensor, a pressure sensor, an ultrasonic sensor and a laser radar sensor.

3. The vehicle collision safety system according to claim 1,
wherein the engine includes an internal combustion engine.

4. A vehicle collision safety system comprising:
an engine having an electric motor (M) in electrical connection with a fuel cell;
a hydrogen tank for storing a fuel gas to be provided for an electrode in the fuel cell;
a plurality of collision detectors (Fr1, Fr2, Rr1, Rr2) for generating a collision signal upon detecting a collision of a vehicle; and
a calculation means (FCECU) for determining the collision of the vehicle upon receiving the collision signal from the collision detectors (Fr1, Fr2, Rr1, Rr2), provision of the fuel gas being shut off when the collision is determined by the calculation means (FCECU),
wherein the plurality of collision detectors (Fr1, Fr2, Rr1, Rr2) include a verification collision detector (Fr2) for verification of collision detection and at least two other collision detectors (two of Fr1, Rr1, Rr2), the verification collision detector being at a proximity of the calculation means (FCECU); and
the calculation means (FCECU) determines the collision of the vehicle when receiving a collision signal from the verification collision detector (Fr2) and a collision signal from at least one of the two other collision detectors (one of Fr1, Rr1, Rr2).

5. The vehicle collision safety system according to claim 4,
wherein the verification collision detector (Fr2) includes an airbag acceleration sensor, a strain sensor, a pressure sensor, an ultrasonic sensor and a laser radar sensor.

6. The vehicle collision safety system according to claim 1, wherein
the at least one of the two other collision detectors (one of Fr1, Rr1, Rr2) is at a proximity of the power unit (B).

## Patentansprüche

1. Fahrzeugkollisions-Sicherheitssystem, aufweisend:
eine Maschine mit einem Elektromotor (M);
eine Leistungsversorgungseinheit (B), die mit dem Elektromotor (M) in elektrischer Verbindung steht, um Strom zu laden und zu entladen;
eine Vielzahl von Kollisionsdetektoren (Fr1, Fr2, Rr1, Rr2), die bei Erfassung einer Kollision eines Fahrzeugs ein Kollisionssignal erzeugen; und
ein Berechnungsmittel (HVECU), das bei Empfang des Kollisionssignals von den Kollisionsdetektoren (Fr1, Fr2, Rr1, Rr2) die Kollision des Fahrzeugs feststellt,
wobei das Laden und Entladen von Strom von der Leistungsversorgungseinheit (B) unterbrochen wird, wenn vom Berechnungsmittel (HVECU) die Kollision festgestellt wird,
wobei die Vielzahl von Kollisionsdetektoren (Fr1, Fr2, Rr1, Rr2) einen Kollisionsverifizierungsdetektor (Fr2) zur Verifizierung einer Kollisionserfassung und mindestens zwei andere Kollisionsdetektoren (zwei von Fr1, Rr1, Rr2) beinhaltet, das Berechnungsmittel (HVECU) die Kollision des Fahrzeugs feststellt, wenn es ein Kollisionssignal vom Kollisionsverifizierungsdetektor (Fr2) und ein Kollisionssignal von mindestens einem der beiden anderen Kollisionsdetektoren (einem von Fr1, Rrl Rr2) empfängt,
und **dadurch gekennzeichnet ist, dass**
der Kollisionsverifzierungsdetektor (Fr2) sich nahe am Berechnungsmittel (HVECU) befindet.

2. Fahrzeugkollisions-Sicherheitssystem nach Anspruch 1,
wobei der Kollisionsverifizierungsdetektor (Fr2) einen Airbag-Beschleunigungssensor, einen Dehnungssensor, einen Drucksensor, einen Ultraschallsensor und einen Laserradarsensor beinhaltet.

3. Fahrzeugkollisions-Sicherheitssystem nach Anspruch 1,
wobei die Maschine einen Verbrennungsmotor beinhaltet.

4. Fahrzeugkollisions-Sicherheitssystem, aufweisend:
eine Maschine mit einem Elektromotor (M), der elektrisch mit einer Brennstoffzelle verbunden ist;
einen Wasserstofftank zum Bevorraten eines Brennstoffgases, das einer Elektrode in der Brennstoffzelle zugeführt wird;
eine Vielzahl von Kollisionsdetektoren (Fr1, Fr2, Rr1, Rr2), die bei Erfassen einer Kollision eines Fahrzeugs ein Kollisionssignal erzeugen; und
ein Berechnungsmittel (FCECU), das bei Empfang des Kollisionssignals von den Kollisionsdetektoren (Fr1, Fr2, Rr1, Rr2) die Kollision des Fahrzeugs feststellt,
wobei die Brennstoffgaszufuhr unterbrochen wird, wenn vom Berechnungsmittel (FCECU) die Kollision festgestellt wird,
wobei die Vielzahl von Kollisionsdetektoren (Fr1, Fr2, Rr1, Rr2) einen Kollisionsverifizierungsdetektor (Fr2) zur Verifizierung einer Kollisionserfassung und
mindestens zwei andere Kollisionsdetektoren (zwei von Fr1, Rr1, Rr2) beinhaltet,
wobei der Kollisionsverifzierungsdetektor sich nahe am Berechnungsmittel (FCECU) befindet; und
das Berechnungsmittel (FCECU) bestimmt, dass eine Kollision des Fahrzeugs stattgefunden hat, wenn es ein Kollisionssignal vom Kollisionsverifizierungsdetektor (Fr2) und ein Kollisionssignal von mindestens einem der beiden anderen Kollisionsdetektoren (einem von Fr1, Rr1, Rr2) empfängt.

5. Fahrzeugkollisions-Sicherheitssystem nach Anspruch 4,
wobei der Kollisionsverifizierungsdetektor (Fr2) einen Airbag-Beschleunigungssensor, einen Dehnungssensor, einen Drucksensor, einen Ultraschallsensor und einen Laserradarsensor beinhaltet.

6. Fahrzeugkollisions-Sicherheitssystem nach Anspruch 1,
wobei mindestens einer der beiden anderen Kollisionsdetektoren (einer von Fr1, Rr1, Rr2) sich nahe an der Leistungsversorgungseinheit (B) befindet.

## Revendications

1. Dispositif de sécurité en cas de collision pour un véhicule comprenant:
un moteur ayant un moteur électrique (M);
un bloc d'alimentation (B) en connexion électrique avec le moteur électrique (M) pour charger et décharger de l'électricité;
une pluralité de détecteurs de collision (Fr1, Fr2, Rr1, Rr2,) pour générer un signal de collision en détectant une collision d'un véhicule; et
un moyen de calcul (HVECU) pour déterminer la collision du véhicule à la réception du signal de collision en provenance des détecteurs de collision (Fr1, Fr2, Rr1, Rr2),
le chargement et le déchargement de l'électricité à partir du bloc d'alimentation (B) étant interrompu lorsque la collision est déterminée par le moyen de calcul (HVECU),
où la pluralité de détecteurs de collision (Fr1, Fr2, Rr1, Rr2) comportent un détecteur de collision (Fr2) de vérification pour vérifier la détection de collision et au moins deux autres détecteurs de collision (deux parmi Fr1, Rr1, Rr2),
le moyen de calcul (HVECU) détermine la collision du véhicule lors de la réception d'un signal de collision provenant du détecteur de collision (Fr2) de vérification et d'un signal de collision provenant d'au moins l'un des deux autres détecteurs de collision (l'un parmi Fr1, Rr1, Rr2), et
**caractérisé en ce que** le détecteur de collision (Fr2) de vérification est à proximité du moyen de calcul (HVECU).

2. Dispositif de sécurité en cas de collision pour un véhicule selon la revendication 1,
où le détecteur de collision (Fr2) de vérification comporte un capteur d'accélération pour coussin de sécurité gonflable, un capteur de déformation, un capteur de pression, un capteur à ultrasons et un capteur radar laser.

3. Dispositif de sécurité en cas de collision pour un véhicule selon la revendication 1,
où le moteur comporte un moteur à combustion interne.

4. Dispositif de sécurité en cas de collision pour un véhicule comprenant:
un moteur ayant un moteur électrique (M) en connexion électrique avec une pile à combustible;
un réservoir d'hydrogène pour stocker un gaz combustible à fournir à une électrode dans la pile à combustible;
une pluralité de détecteurs de collision (Fr1, Fr2, Rr1, Rr2) pour générer un signal de collision lors de la détection d'une collision d'un véhicule; et
un moyen de calcul (FCECU) pour déterminer la collision du véhicule à la réception du signal de collision provenant des détecteurs de collision (Fr1, Fr2, Rr1, Rr2), l'alimentation en gaz combustible étant interrompue lorsque la collision est déterminée par le moyen de calcul (FCECU),
où la pluralité de détecteurs de collision (Fr1, Fr2, Rr1, Rr2) comporte un détecteur de collision (Fr2) de vérification pour vérifier une détection de collision et au moins deux autres détecteurs de collision (deux parmi Fr1, Rr1, Rr2), le détecteur de collision de vérification étant à proximité du moyen de calcul (FCECU); et
le moyen de calcul (FCECU) détermine la collision du véhicule lors de la réception d'un signal de collision provenant du détecteur de collision (Fr2) de vérification et d'un signal de collision provenant d'au moins l'un des deux autres détecteurs de collision (l'un parmi Fr1, Rr1, Rr2).

5. Dispositif de sécurité en cas de collision pour un véhicule selon la revendication 4,
où le détecteur de collision (Fr2) de vérification comporte un capteur d'accélération pour coussin de sécurité gonflable, un capteur de déformation, un capteur de pression, un capteur à ultrasons et un capteur radar laser.

6. Dispositif de sécurité en cas de collision pour un véhicule selon la revendication 1, dans lequel
au moins l'un des deux autres détecteurs de collision (l'un parmi Fr1, Rr1, Rr2) se trouve à proximité du bloc d'alimentation (B).
